# EUROPEAN PATENT SPECIFICATION

(11) **EP 4 420 928 B1**
(45) Date of publication and mention of the grant of the patent: **08.04.2026**
(21) Application number: 24154131.7
(22) Date of filing: 26.01.2024
(51) Int. Cl.: B60P 1/26, B60P 1/43, B60P 3/06

(54) **VEHICLE CARGO BOX, ESPECIALLY OF TIPPER LORRIES**
FAHRZEUG-LADEBOX, INSBESONDERE VON KIPPER-FAHRZEUGEN
CAISSE DE CHARGEMENT POUR VÉHICULES, NOTAMMENT DE CAMIONS À BENNE BASCULANTE

(43) Date of publication of application: 28.08.2024
(73) Proprietor: RCM Sp. z o.o., 19-500 Goldap Niedrzwica (PL)
(72) Inventor: Switaj, Krzysztof, 19-500 Goldap Niedrzwica (PL)
(74) Representative: Jedrzejewski, Michal

(56) References cited:
- DE-A1- 102020 116 809
- DE-U1- 202015 106 894
- GB-A- 2 100 678
- JP-A- 2011 230 653
- ROLNIK SZUKA: "PRZYCZEPA SKORUPOWA RCM - HYBRYDOWA BUDOWLANO - ROLNICZA (Prezentacja / Test)", 8 May 2022 (2022-05-08), XP093131913, Retrieved from the Internet <URL:https://www.youtube.com/watch?v=_qLUtoA0AFg> [retrieved on 20240215]

## Description

The object of the invention is a vehicle cargo box, in particular for tipper lorries.

Known solutions of cargo boxes for tipper lorries typically use a tail door as described in JP 2011 230 653A, GB 210 0678A, DE 10 2020 116 809A, DE 20 2015 106 894U and Rolnik Szuka: "PRZYCZEPA SKORUPOWA RCM - HYBRYDOWA BUDOWLANO - ROLNICZA (Prezentacja / Test)" URL:https://www.youtube.com/watch? v=_qLUtoA0AFg. This term is to be understood as an elongated element with an axis of rotation situated near the rear edge of the cargo box floor in tipper lorries. The tail door serves three functions. Firstly, is locks the tailboard in a closed position, preventing it from opening; secondly, it seals the connection between the box and the tailboard in the lower part, preventing bulk cargo from getting out of the box; and thirdly, in the open/rearward-tilted position, it serves the function of a chute, moving the cargo dump point away from the box and the vehicle. The tail door is driven hydraulically or pneumatically by actuators.

The term tailboard is to be understood as an element serving the function of closing the inside of the tipper lorry box, and preventing the cargo from spilling out of the box during loading and transport. The tailboard has an axis of rotation near its upper edge, and it is usually mounted to the upper edge of the sideboards. It is not until after it is unlocked or opened that the unloading of the cargo during its skipping is made possible.

There are several possible versions of the tailboard. Firstly, it is a straight board which drops due to gravity and requires locking in order to achieve the closed position. Secondly, it is a so-called hydraulic board moved by hydraulic actuators, which can be, but does not have to be, additionally locked. Thirdly, having the form of a tailboard door provided with additional hinges allowing it to open like a door, when tilted to at least one side. And finally, fourthly and most importantly, it makes ramp doors, serving the function of a standard board or a hydraulic board and ramps-inclines allowing vehicles to drive aboard the cargo box.

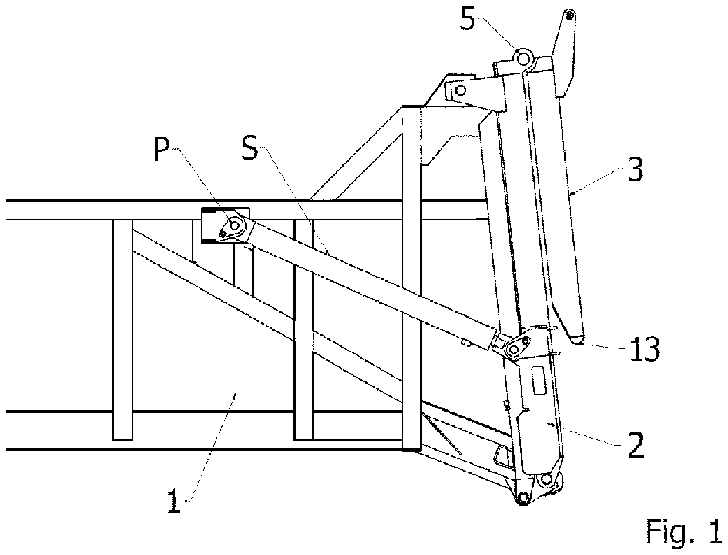

Other known solutions, as shown in fig. 1 presenting the rear portion of the cargo box 1 in a side view, use ramp platforms consisting of a tailboard 2 and a ramp door 3. The tailboards 2 are hingedly driven by means of actuators S placed on the sides of the box 1, for which proper spaces must be provided. The actuators must be mounted to the box 1 at a precisely specified point P, situated considerably high, which in effect enforces sometimes the use of unnecessarily high boards. As a consequence, due to the actuators situated on the sides of the boards, it is not possible to use openable boards or hydraulic boards. As shown, slightly below half its height, the tailboard 2 is connected to the pistons of laterally situated actuators S. With a locked connection of the tailboard 2 to the box 1 in its lower part and having unlocked the connection of the tailboard 2 to the box 1 in its upper part, the tailboard 2 along with the ramp doors 3 adjacent thereto in the initial phase of motion tilts around the axis of rotation 5, until reaching an unfolded state of the ramp platform, when the edges 11 of the ramp doors 3 are in a resting position against the ground, and at the same time the tailboard 2 and the ramp doors 3 open up with respect to the axis of rotation 5.

When the box of the tipper lorry reaches the skipping position, i.e. when its front part is raised upwards, then the tailboard 2 becomes released from the state of being locked at its lower edge, and it tilts around the axis of rotation 5, situated in the upper part of the cargo box 1, resulting in the formation of a gap between the rear edge of the cargo box bottom and the tailboard 2, through which the contents of the cargo box are spilled to the outside.

The purpose of the invention is to develop the construction of a vehicle cargo box, in particular for tipper lorries, not showing the inconveniences of known cargo boxes.

Thus the vehicle cargo box, in particular for a tipper lorry, having two sideboards and a basically fixed front board, in its rear part provided with a tailboard tiltable around the axes of rotation situated in the upper, corner elements of both sideboards, when the box is in the phase of skipping the cargo placed therein, and alternatively tiltable around the axes of rotation situated near the lower, corner elements of both sideboards, when the tailboard along with ramp doors hingedly connected thereto at its upper edge forms a ramp platform provided for driving thereon the equipment intended for placement in the cargo box for the duration of transporting this equipment, and moreover provided with a tail door tiltable by means of actuators situated under the bottom of the cargo box from a position of pressing against the tailboard to its tilted position, when the tailboard is in the skipping position and at the same time performs a tilting motion around an axis of rotation situated along the upper edge of the tailboard, according to the invention it is characterised in that the tail door is temporarily fixedly coupled with the tailboard, causing its tilting motion around an axis of rotation situated along the lower edge of the tailboard, when it is brought into the position of the ramp platform. Preferably, the tail door is connected to the actuators by means of coupling arms.

In accordance with the essence of the solution according to the invention, the positioning of the actuators is envisaged below the cargo box of the tipper lorry, consequently they do not occupy the space determining the width of the box, which means the ability to obtain increased loading space of the box.

Subsequently, it should be noted that the positioning of the actuators below the box does not necessitate the use of high boards. Apart from tailboard posts, the existence of sideboards is not required whatsoever for the resulting mechanism to operate. Therefore, a platform with no boards may be contemplated.

Moreover, it is possible to use tiltable openable boards, or a hydraulic board, and there will be no collision with the actuators of the ramp doors.

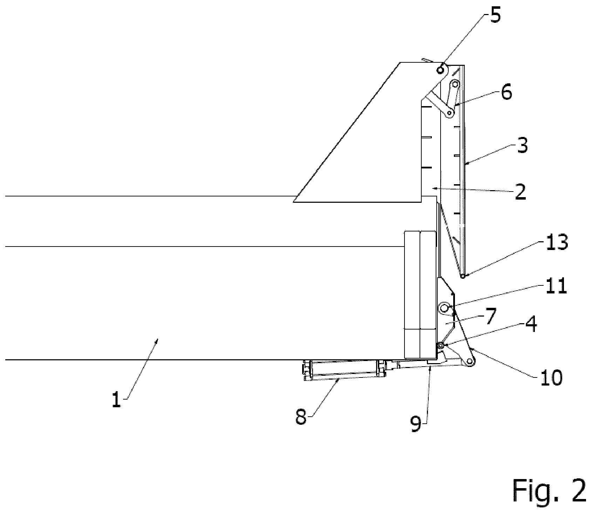

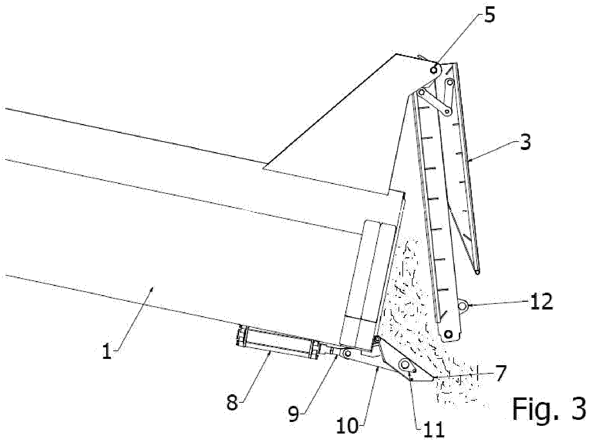

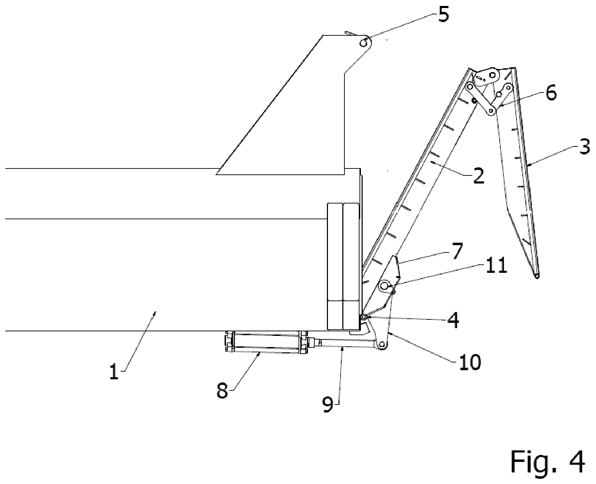

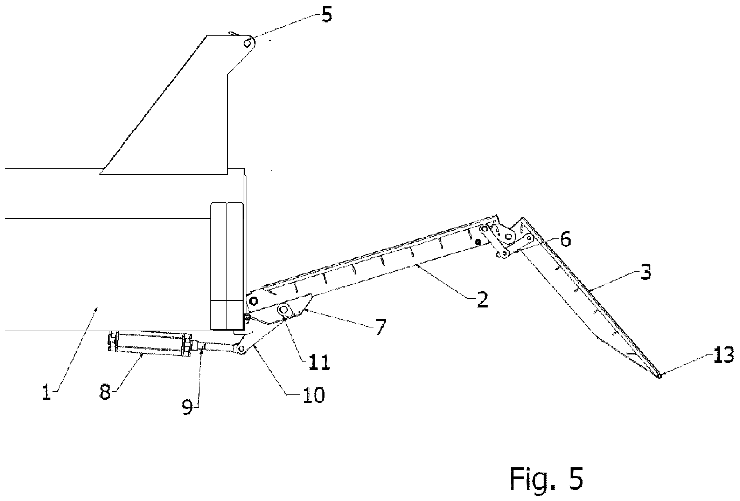

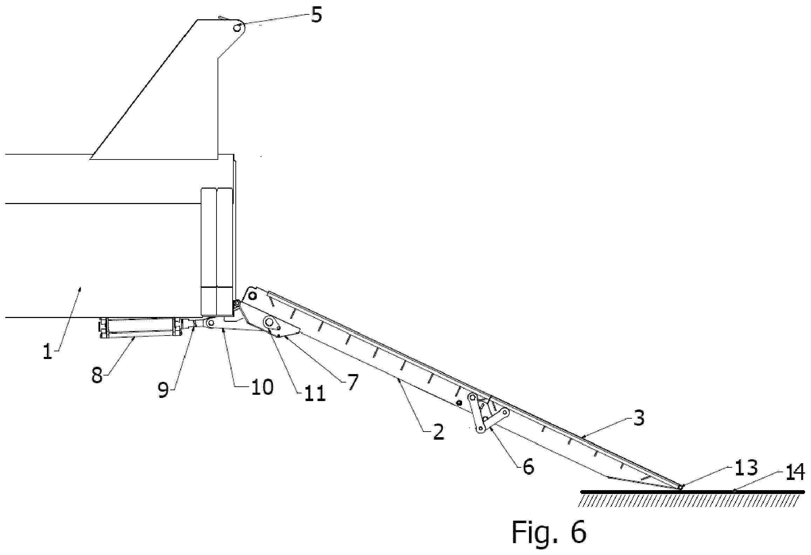

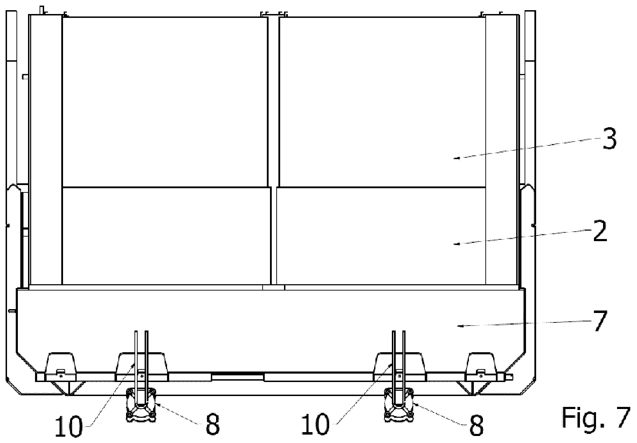

The object of the invention will be presented in more detail in embodiments presented by the attached drawings, of which fig. 2 presents the rear portion of the cargo box in a side view, in the closed state of this box, fig. 3-the box of fig. 2 in the skipping position, when its front is raised and the contents of the box are being spilled out, fig. 4-the box of fig. 2 in the initial position of forming a ramp platform, fig. 5-the box of fig. 4 in a further phase of forming the ramp platform, fig. 6-the box of fig. 5 in the final phase of forming the ramp platform, while fig. 7 presents the cargo box in a rear view.

As shown in fig. 2, the cargo box 1 of the tipper lorry is closed in its rear part by the tailboard 2, hingedly connected to the ramp doors 3. The tailboard 2 is tiltable around the axes of rotation 4 situated near the lower, corner elements of both sideboards, when the tailboard 2 along with the ramp doors 3 hingedly connected thereto at its upper edge forms a ramp platform provided for driving thereon the equipment intended for placement in the cargo box 1 for the duration of transporting this equipment, as depicted in fig. 6.

The intermediate phases of forming the ramp platform are shown in fig. 4 and fig. 5. As depicted in them, when forming the ramp platform, the tailboard 2 is initially decoupled from the axis of rotation 5 situated along the upper edge of the tailboard 2, and at the same time, when performing the tilting motion, the ramp doors 3 tilt around hinges 6. After decoupling the tailboard from the axis of rotation 5, the tail door 7, in this phase connected to the tailboard 2, driven by a actuator 8 with a piston 9 via a coupling arm 10, causes the tailboard 2 to tilt around the lower, horizontal axis of rotation 4. Therefore, as shown in fig. 4 and fig. 5, the upper edge of the tailboard 2 moves gradually away from the cargo box 1, and along with it, with the hinges 6 loosened, the ramp doors 3 move until their working edges 11 rest against the ground 12, which is depicted in fig. 6.

In accordance with fig. 3, when the cargo box 1 is in the phase of skipping the cargo placed therein, that is, when its front part is in a raised position, then the tail door 7 is disconnected from the tailboard 2 by tilting rearwards, accomplished by means of the actuator 8 with the piston 9, via the coupling arm 10, which results in tilting the tailboard 2 around the upper, horizontal axis of rotation 5, with bolts 11 sliding out of the openings in eyes 12 before the initiation of this tilting.

## Claims

1. A vehicle cargo box, in particular for a tipper lorry, having two sideboards and a substantially fixed front board, provided in its rear part with a tailboard tiltable around the axes of rotation situated in the upper, corner elements of both sideboards, when the box is in the phase of skipping the cargo placed therein, and alternatively tiltable around the axes of rotation situated near the lower, corner elements of both sideboards, when the tailboard along with ramp doors hingedly connected thereto at its upper edge forms a ramp platform provided for driving thereon the equipment intended for placement in the cargo box for the duration of transporting this equipment, and **characterised in that** the ramp platform is provided with a tail door tiltable by means of actuators situated under the bottom of the cargo box from a position of pressing against the tailboard to its tilted position, when the tailboard is in the skipping position and at the same time performs a tilting motion around an axis of rotation situated along the upper edge of the tailboard, the tail door (7) is temporarily fixedly coupled with the tailboard (2), causing its tilting motion around an axis of rotation (4) situated along the lower edge of the tailboard (2), when it is brought into the position of the ramp platform.

2. The box according to claim 1, **characterised in that** the tail door (7) is connected to the actuators (8) by means of coupling arms (10).

## Patentansprüche

1. Fahrzeugladekasten, insbesondere für einen Kipplastwagen, mit zwei Seitenwänden und einer im Wesentlichen feststehenden Vorderwand, die in ihrem hinteren Teil mit einer Heckklappe versehen ist, die um die Drehachsen in den oberen Eckelementen beider Seitenwände schwenkbar ist, wenn sich der Kasten in der Phase des Entladens der darin befindlichen Ladung befindet, und alternativ um die Drehachsen in der Nähe der unteren , wenn die Heckklappe zusammen mit den an ihrer Oberkante gelenkig verbundenen Rampentüren eine Rampenplattform bildet, auf der die für die Unterbringung in der Ladefläche bestimmte Ausrüstung während des Transports dieser Ausrüstung gefahren werden kann, und **dadurch gekennzeichnet, dass** die Rampenplattform mit einer Heckklappe versehen ist, die mittels unter dem Boden der Ladefläche angeordneten Stellantrieben aus einer an die Heckklappe gedrückten Position in ihre gekippte Position gekippt werden kann, wenn sich die Heckklappe in der Sprungposition befindet und gleichzeitig eine Kippbewegung um eine Drehachse ausführt, die entlang der Oberkante der Heckklappe angeordnet ist, die Heckklappe (7) vorübergehend fest mit der Heckklappe (2) verbunden ist, wodurch ihre Kippbewegung um eine Drehachse (4) verursacht wird, die entlang der Unterkante der Heckklappe (2) angeordnet ist, wenn sie in die Position der Rampenplattform gebracht wird.

2. Kasten nach Anspruch 1, **dadurch gekennzeichnet, dass** die Heckklappe (7) über Kupplungsarme (10) mit den Stellantrieben (8) verbunden ist.

## Revendications

1. Caisse de véhicule, en particulier pour camion à benne basculante, comportant deux ridelles latérales et une ridelle avant sensiblement fixe, pourvue dans sa partie arrière d'un hayon pouvant basculer autour des axes de rotation situés dans les éléments d'angle supérieurs des deux ridelles latérales, lorsque la caisse est en phase de déchargement de la cargaison qui y est placée, et pouvant alternativement basculer autour des axes de rotation situés près des éléments d'angle inférieurs des deux panneaux latéraux, lorsque le hayon arrière, avec les portes de rampe reliées de manière articulée à son bord supérieur, forme une plate-forme de rampe prévue pour y conduire l'équipement destiné à être placé dans la caisse de chargement pendant la durée du transport de cet équipement, et **caractérisée en ce que** la plate-forme de rampe est pourvue d'une porte arrière pouvant être basculée au moyen d'actionneurs situés sous le fond de la caisse de chargement, d'une position de pression contre le hayon arrière à sa position basculée, lorsque le hayon est en position relevée et effectue en même temps un mouvement de basculement autour d'un axe de rotation situé le long du bord supérieur du hayon, la porte arrière (7) est temporairement couplée de manière fixe au hayon (2), provoquant son mouvement de basculement autour d'un axe de rotation (4) situé le long du bord inférieur du hayon (2), lorsqu'elle est amenée dans la position de la plate-forme à rampe.

2. La caisse selon la revendication 1, **caractérisée en ce que** la porte arrière (7) est reliée aux actionneurs (8) au moyen de bras d'accouplement (10).
